# EUROPEAN PATENT APPLICATION

(11) **EP 4 597 958 A1**
(43) Date of publication of application: **06.08.2025**
(21) Application number: 22960416.0
(22) Date of filing: 30.09.2022
(51) Int. Cl.: H04L 27/00

(54) **WIRELESS COMMUNICATION METHOD, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: RGTH
(86) International application number: PCT/CN2022/123580
(87) International publication number: WO 2024/065806

(57) **Abstract**

A wireless communication method, a terminal device, and a network device are provided. The method includes: determining, by a terminal device, a target uplink waveform from a plurality of uplink waveforms. The target uplink waveform is used for the terminal device to perform uplink communication with a network device. The terminal device determines a to-be-used uplink waveform from the plurality of uplink waveforms, so that waveform switching flexibility can be improved.

## Description

### TECHNICAL FIELD

This application relates to the field of communications technologies, and specifically, to a wireless communication method, a terminal device, and a network device.

### BACKGROUND

A terminal device may support a plurality of uplink waveforms. In a related technology, a type of an uplink waveform used by the terminal device is semi-statically configured and cannot be flexibly switched.

### SUMMARY

Embodiments of this application provide a wireless communication method, a terminal device, and a network device. Various aspects used in the embodiments of this application are described below.

According to a first aspect, a wireless communication method is provided, including: determining, by a terminal device, a target uplink waveform from a plurality of uplink waveforms, where the target uplink waveform is used for the terminal device to perform uplink communication with a network device.

According to a second aspect, a wireless communication method is provided, including: receiving, by a network device, uplink data of a terminal device based on a target uplink waveform, where the target uplink waveform is a waveform that is determined by the terminal device from a plurality of uplink waveforms and is used to perform uplink communication with the network device.

According to a third aspect, a terminal device is provided, including: a determining module, configured to determine a target uplink waveform from a plurality of uplink waveforms, where the target uplink waveform is used for the terminal device to perform uplink communication with a network device.

According to a fourth aspect, a network device is provided, including: a first receiving module, configured to receive uplink data of a terminal device based on a target uplink waveform, where the target uplink waveform is a waveform that is determined by the terminal device from a plurality of uplink waveforms and is used to perform uplink communication with the network device.

According to a fifth aspect, a terminal device is provided, including a memory and a processor, where the memory is configured to store a program, and the processor is configured to invoke the program in the memory, to cause the terminal device to perform the method according to the first aspect.

According to a sixth aspect, a network device is provided, including a memory and a processor, where the memory is configured to store a program, and the processor is configured to invoke the program in the memory, to cause the network device to perform the method according to the second aspect.

According to a seventh aspect, an apparatus is provided, including a processor, configured to invoke a program from a memory, to cause the apparatus to perform the method according to the first aspect or the second aspect.

According to a seventh aspect, a chip is provided, including a processor configured to invoke a program from a memory, to cause a device on which the chip is installed to perform the method according to the first aspect or the second aspect.

According to a ninth aspect, a computer-readable storage medium is provided, where the computer-readable storage medium stores a program thereon, and the program causes a computer to perform the method according to the first aspect or the second aspect.

According to a tenth aspect, a computer program product is provided, including a program, where the program causes a computer to perform the method according to the first aspect or the second aspect.

According to an eleventh aspect, a computer program is provided, where the computer program causes a computer to perform a method according to the first aspect or the second aspect.

The terminal device determines the uplink waveform from the plurality of uplink waveforms, so that waveform switching flexibility can be improved.

### BRIEF DESCRIPTION OF DRAWINGS

FIG. 1 is a schematic diagram of a communications system to which embodiments of this application may be applicable.
FIG. 2 is a schematic diagram of waveform processing processes for two types of waveforms that are related to in an embodiment of this application.
FIG. 3 is a schematic flowchart of a wireless communication method according to an embodiment of this application.
FIG. 4 is an example diagram of a possible implementation of the method shown in FIG. 3.
FIG. 5 is an example diagram of a communication process based on first indication information (for example, waveform indication information) according to an embodiment of this application.
FIG. 6 is a schematic flowchart of a wireless communication method according to another embodiment of this application.
FIG. 7 is an example diagram of a communication process based on a first request (for example, a waveform switching request) according to an embodiment of this application.
FIG. 8 is a schematic structural diagram of a terminal device according to an embodiment of this application.
FIG. 9 is a schematic structural diagram of a network device according to an embodiment of this application.
FIG. 10 is a schematic structural diagram of an apparatus according to an embodiment of this application.

### DESCRIPTION OF EMBODIMENTS

Embodiments of this application may be applied to various communications systems. For example, embodiments of this application may be applied to a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an advanced long term evolution (advanced long term evolution, LTE-A) system, a new radio (new radio, NR) system, an evolution system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunications system (universal mobile telecommunications system, UMTS), a wireless local area network (wireless local area networks, WLAN), wireless fidelity (wireless fidelity, Wi-Fi), and a 5th generation (5th generation, 5G) communications system. Embodiments of this application may be further applied to another communications system, for example, a future communications system. The future communications system may be, for example, a 6th generation (6th generation, 6G) mobile communications system, or a satellite communications system.

A limited quantity of connections may be supported by conventional communications systems, and are also easy to implement. However, with the development of communications technologies, a communications system may support not only conventional cellular communication but also one or more types of communication in another type. For example, the communications system may support one or more types of following communication: device-to-device (device-to-device, D2D) communication, machine-to-machine (machine-to-machine, M2M) communication, machine type communication (machine type communication, MTC), vehicle-to-vehicle (vehicle-to-vehicle, V2V) communication, vehicle-to-everything (vehicle-to-everything, V2X) communication, or the like. Embodiments of this application may alternatively be applied to a communications system that supports the foregoing communication manners.

The communications system in embodiments of this application may be applied to a carrier aggregation (carrier aggregation, CA) scenario, a dual connectivity (dual connectivity, DC) scenario, or a standalone (standalone, SA) networking scenario.

The communications system in embodiments of this application may be applied to an unlicensed spectrum. The unlicensed spectrum may alternatively be considered as a shared spectrum. Alternatively, the communications system in embodiments of this application may be applied to a licensed spectrum. The licensed spectrum may alternatively be considered as a dedicated spectrum.

Embodiments of this application may be applied to a terrestrial network (terrestrial networks, TN) system, or may be applied to a non-terrestrial network (non-terrestrial network, NTN) system. In an example, the NTN system may include an NR-based NTN system and an Internet of Things (Internet of Things, IoT)-based NTN system.

The communications system may include one or more terminal devices. The terminal device as mentioned in embodiments of this application may alternatively be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, a user apparatus, or the like.

In some embodiments, the terminal device may be a station (STATION, ST) in the WLAN. In some embodiments, the terminal device may alternatively be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or any other processing device connected to a wireless modem, a vehicle-mounted device, a wearable device, a terminal device in a next generation communications system (for example, an NR system), a terminal device in a future evolved public land mobile network (public land mobile network, PLMN), or the like.

In some embodiments, the terminal device may be a device providing a user with voice and/or data connectivity. For example, the terminal device may be a device having a wireless connection function, such as a handheld device, a vehicle-mounted device, or the like. In some specific examples, the terminal device may be a mobile phone (mobile phone), a tablet computer (Pad), a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

In some embodiments, the terminal device may be deployed on land. For example, the terminal device may be deployed indoors or outdoors. In some embodiments, the terminal device may be deployed on water, for example, on a ship. In some embodiments, the terminal device may be deployed in the air, for example, on an airplane, a balloon, or a satellite.

In addition to the terminal device, the communications system may further include one or more network devices. The network device in embodiments of this application may be a device for communicating with the terminal device. The network device may alternatively be referred to as an access network device or a wireless access network device. The network device may be, for example, a base station. The network device in embodiments of this application may be a radio access network (radio access network, RAN) node (or device) that connects the terminal device to a wireless network. The access network device may broadly cover following various names, or may be replaced with following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (base band unit, BBU), a remote radio unit (remote radio Unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communication, a network-side device in a 6G network, a device that functions as a base station in a future communications system, or the like. The base station may support networks with a same access technology or different access technologies. A specific technology and a specific device form used by the network device are not limited in embodiments of this application.

The base station may be fixed or mobile. For example, a helicopter or an unmanned aerial vehicle may be configured to function as a mobile base station, and one or more cells may move based on a location of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

By way of example rather than limitation, in embodiments of this application, the network device may have a mobility characteristic. For example, the network device may be a mobile device. In some embodiments of this application, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments of this application, the network device may alternatively be a base station disposed on land, water, or the like.

In embodiments of this application, the network device may provide a service for a cell, and the terminal device communicates with the network device by using a transmission resource (such as a frequency domain resource or a spectrum resource) used by the cell. The cell may be a cell corresponding to the network device (for example, a base station). The cell may belong to a macro base station or belong to a base station corresponding to a small cell (small cell). The small cell herein may include a metro cell (metro cell), a micro cell (micro cell), a pico cell (pico cell), a femto cell (femto cell), or the like. The small cells feature small coverage and a low transmit power, and are suitable for providing a high-speed data transmission service.

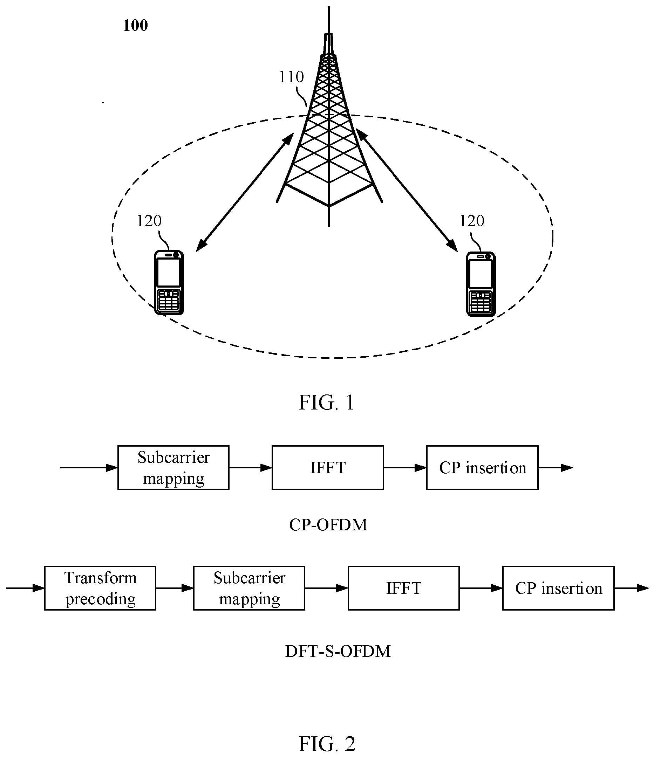

For example, FIG. 1 is a schematic architectural diagram of a communications system according to an embodiment of this application. As shown in FIG. 1, a communications system 100 may include a network device 110, and the network device 110 may be a device that communicates with a terminal device 120 (or referred to as a communications terminal or a terminal). The network device 110 may provide communication coverage for a specific geographical area, and may communicate with a terminal device located within the coverage.

FIG. 1 exemplarily shows one network device and two terminal devices. In some embodiments of this application, the communications system 100 may include a plurality of network devices and another quantity of terminal devices may be included within coverage of each network device. This is not limited in embodiments of this application.

In some embodiments of this application, the wireless communications system shown in FIG. 1 may further include another network entity such as a mobility management entity (mobility management entity, MME) or an access and mobility management function (access and mobility management function, AMF). This is not limited in embodiments of this application.

It should be understood that in embodiments of this application, a device having a communication function in a network/system may be referred to as a communications device. The communications system 100 shown in FIG. 1 is used as an example. A communications device may include the network device 110 and the terminal device 120 having a communication function, and the network device 110 and the terminal device 120 may be specific devices described above. Details are not described herein. The communications device may further include other devices in the communications system 100, such as a network controller, a mobility management entity, and other network entities. This is not limited in embodiments of this application.

The terminal device may support a plurality of uplink waveforms. In addition, different uplink waveforms have different features or performance. For example, two waveforms that are a cyclic prefix-orthogonal frequency division multiplexing (cyclic prefix orthogonal frequency division multiplexing, CP-OFDM) waveform and a Fourier transform-spread-orthogonal frequency division multiplexing (discrete fourier transform spread orthogonal frequency division multiplexing, DFT-S-OFDM) waveform are supported in NR. The DFT-S-OFDM waveform has features of a single-carrier characteristic and a low peak-to-average power ratio (peak to average power ratio, PAPR). Currently, the DFT-S-OFDM waveform is mainly used in an edge coverage scenario with a limited power, and supports only a single stream data transmission scenario. In addition, if the terminal device uses the DFT-S-OFDM waveform, the network device needs to allocate continuous frequency domain resources to the terminal device. The CP-OFDM waveform supports up to four streams on an uplink. If the terminal device uses the CP-OFDM waveform, the network device may allocate discontinuous frequency domain resources to the terminal device.

FIG. 2 is a schematic diagram of processing processes of a CP-OFDM waveform and a DFT-S-OFDM waveform. The CP-OFDM waveform may be used on an uplink and a downlink. As shown in FIG. 2, the processing process of the CP-OFDM waveform includes subprocesses such as subcarrier mapping (sub-carrier mapping), inverse fast Fourier transform (inverse fast fourier transform, IFFT), and CP insertion (CP insertion). Currently, the DFT-S-OFDM waveform is applicable to only an uplink. As shown in FIG. 2, different from the processing process of the CP-OFDM waveform, transform precoding (transform precoding) processing needs to be first performed on the DFT-S-OFDM waveform before the subcarrier mapping.

In some communications systems (for example, an NR system), the CP-OFDM waveform or the DFT-S-OFDM waveform may be used on an uplink, and is specifically configured by using following radio resource control (radio resource control, RRC) parameters:

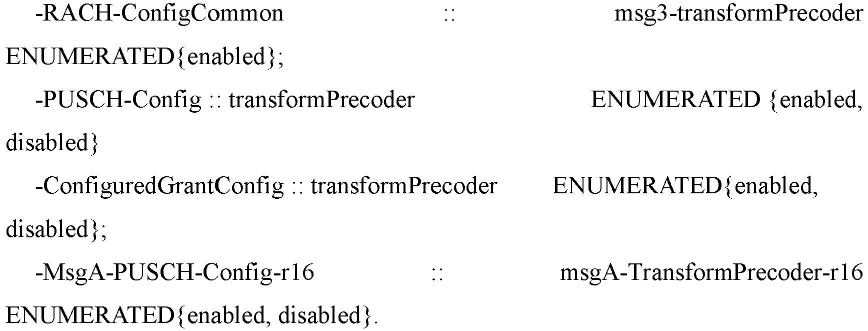

Coverage is one of key factors that operators consider when commercializing cellular communication networks because the coverage directly affects service quality, capital expenditure, and operating costs. In most scenarios actually deployed, uplink performance may be a bottleneck, and in some vertical cases, uplink traffic is large, for example, video uploading.

In the Rel-17 research project 900061 "NR coverage enhancement", some bottleneck channels determined in the "860036" research project "NR coverage enhancement research" are expanded, especially NR coverage of a physical uplink shared channel (physical uplink shared channel, PUSCH), a physical uplink control channel (physical uplink control channel, PUCCH), and a message 3 (Msg3). However, due to a limited range of the Rel-17 WID, not all requirements for coverage enhancement are met.

Compared with the CP-OFDM, the DFT-S-OFDM waveform has a relatively low PAPR, which facilitates limited uplink coverage. Currently, an uplink waveform is configured through RRC. This limitation imposes a great obstacle on actual switching of a cellular edge terminal device to the DFT-S-OFDM waveform. Therefore, a mechanism for determining the uplink waveform (or a mechanism for switching the uplink waveform) is introduced in embodiments of this application, so that the terminal device can dynamically determine the uplink waveform depending on an actual requirement, to improve uplink coverage performance.

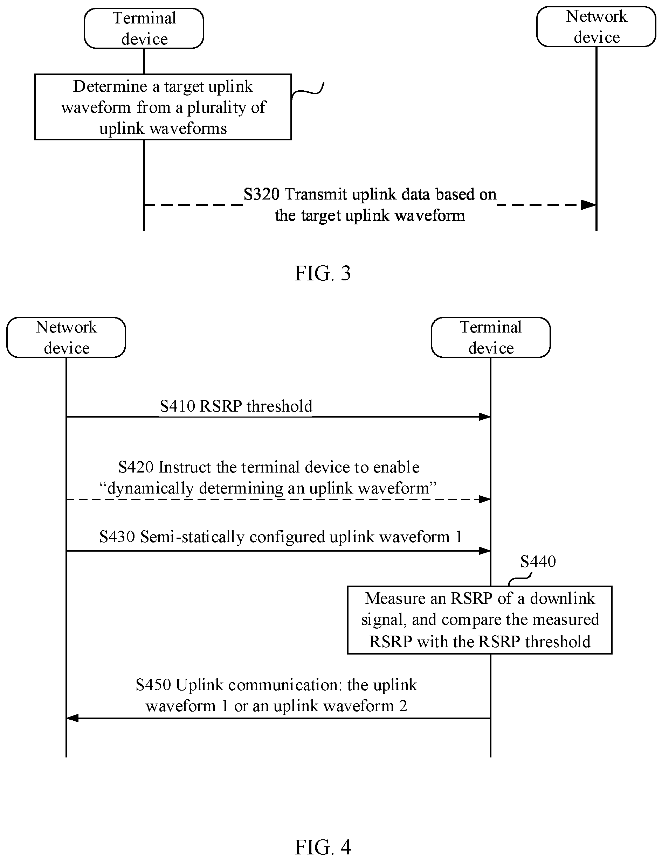

FIG. 3 is an example flowchart of a wireless communication method according to an embodiment of this application.

As shown in FIG. 3, in step S310, a terminal device determines a target uplink waveform from a plurality of uplink waveforms (or referred to as a waveform used for uplink communication).

In some embodiments, the plurality of uplink waveforms may include some or all of the uplink waveforms supported by the terminal device.

In some embodiments, the plurality of uplink waveforms may include an uplink waveform that can be supported by a current standard or a future standard. For example, the plurality of uplink waveforms may include a first uplink waveform and a second uplink waveform. The first uplink waveform may be, for example, a DFT-S-OFDM waveform, and the second uplink waveform may be, for example, a CP-OFDM waveform.

In some embodiments, the terminal device determining the target uplink waveform includes: the terminal device dynamically determining the target uplink waveform. The "dynamically determining" is relative to "semi-static configuration". The "semi-static configuration" usually has a long configuration cycle. Compared with the configuration cycle of the "semi-static configuration", an uplink waveform can be adjusted through the "dynamically determining" within a shorter time. Therefore, the "dynamically determining" is more flexible. It should be understood that in some embodiments, "a terminal device determining an uplink waveform or determining a target uplink waveform" in each embodiment of this application may be replaced with "a terminal device dynamically determining an uplink waveform or a target uplink waveform".

In some embodiments, the target uplink waveform may refer to a waveform used for uplink communication. Alternatively, the target uplink waveform may be used by the terminal device to perform uplink communication with (or transmit uplink data to) a network device. For example, the target uplink waveform may be a CP-OFDM waveform. For another example, the target uplink waveform may be a DFT-S-OFDM waveform.

In some embodiments, step S320 may be further included as a step in FIG. 3 , that is, the terminal device transmits uplink data to the network device based on the target uplink waveform. Accordingly, the network device may receive the uplink data of the terminal device based on the target uplink waveform.

In some other embodiments, after determining the target uplink waveform, the terminal device may not necessarily transmit the uplink data to the network device based on the target uplink waveform. For example, the terminal device may make a request for waveform switching to the network device. If the network device allows the terminal device to perform the waveform switching, the terminal device may transmit the uplink data to the network device based on the target uplink waveform; or if the network device does not allow the terminal device to perform the waveform switching, the terminal device may transmit the uplink data to the network device based on or not based on the target uplink waveform. For details, see following.

The target uplink waveform may be determined according to a condition or a rule. For example, the target uplink waveform may be determined based on one or more of following: a semi-statically configured uplink waveform; an uplink coverage information of the terminal device; a measurement result of a downlink signal by the terminal device; a requirement on a data transmission throughput (for example, a requirement of the network device on a data transmission throughput); a communication requirement; channel quality of the terminal device; or dynamic indication information sent by the network device (for example, waveform indication information of an uplink waveform). When the target uplink waveform is to be determined, one of the foregoing pieces of information may be individually considered, or a plurality of pieces of information out of the foregoing pieces of information may be comprehensively considered. With reference to Embodiment 1, the following exemplarily describes a manner of determining a target uplink waveform in more detail.

### Embodiment 1.1: Determining a target uplink waveform based on a measurement result of a downlink signal by a terminal device

In some embodiments, before performing uplink communication, the terminal device may determine the target uplink waveform based on the measurement result of the downlink signal. The measurement result of the downlink signal may be used, for example, to measure quality, strength, and/or the like of the downlink signal.

In some embodiments, the downlink signal may include one or more of following: a physical downlink control channel (physical downlink control channel, PDCCH), a physical downlink shared channel (physical downlink shared channel, PDSCH), a synchronization signal block (synchronization signal block, SSB), a channel state information reference signal (channel state information reference signal, CSI-RS), a physical broadcast channel (physical broadcast channel, PBCH), a primary synchronization signal (primary synchronization signal, PSS), a secondary synchronization signal (secondary synchronization signal, SSS), a phase tracking reference signal (phase tracking reference signal, PT-RS), a positioning reference signal (positioning reference signal, PRS), a demodulation reference signal (demodulation reference signal, DMRS), or the like.

In some embodiments, the measurement result of the downlink signal may include one or more of following: a reference signal received power (reference signal receiving power, RSRP), a reference signal received quality (reference signal receiving quality, RSRQ), a received signal strength indicator (received signal strength indicator, RSSI), or the like. Some embodiments are described below by using the RSRP (all RSRPs appearing below may be replaced with the measurement result of the downlink signal) as an example. The embodiments are alternatively applicable to another measurement quantity, such as the RSRQ or the RSSI.

The RSRP is used as an example. If the RSRP measured by the terminal device is lower, it indicates that uplink coverage performance of the terminal device is worse. In this case, the terminal device determines a DFT-S-OFDM waveform as the target uplink waveform, to improve the uplink coverage performance.

In some embodiments, the target uplink waveform may be determined based on a relationship (or referred to as a value relationship) between the measurement result of the downlink signal by the terminal device and a first threshold.

In some embodiments, if the measurement result of the downlink signal is greater than (or is greater than or equal to) the first threshold, the target uplink waveform may be determined as a semi-statically configured uplink waveform. For another example, if the measurement result of the downlink signal is less than (or is less than or equal to) the first threshold, and a semi-statically configured uplink waveform is not an expected uplink waveform for the terminal device, the target uplink waveform may be the expected uplink waveform.

In some embodiments, if the RSRP measured by the terminal device is greater than (or is greater than or equal to) the first threshold (or referred to as an RSRP threshold), the terminal device may have no special requirement on an uplink waveform. Alternatively, the terminal device may use an uplink waveform semi-statically configured by the network device, and does not need to consider waveform switching. If the RSRP measured by the terminal device is less than (or is less than or equal to) the first threshold, the terminal device needs to use a DFT-S-OFDM waveform (if the uplink waveform semi-statically configured by the network device is CP-OFDM, the DFT-S-OFDM waveform needs to be used). Therefore, the terminal device may use the DFT-S-OFDM waveform as the target uplink waveform mentioned above.

In some embodiments, if the measurement result of the downlink signal is less than or equal to the first threshold, the target uplink waveform is a first uplink waveform among a plurality of uplink waveforms (for example, a CP-OFDM waveform); and/or if the measurement result is greater than or equal to the first threshold, the target uplink waveform is a second uplink waveform among a plurality of uplink waveforms (for example, a DFT-S-OFDM waveform).

In some embodiments, if the RSRP measured by the terminal device is greater than (or is greater than or equal to) the first threshold (or referred to as an RSRP threshold), the terminal device may determine the target uplink waveform as the CP-OFDM waveform. If the RSRP measured by the terminal device is less than (or is less than or equal to) the first threshold, the terminal device may determine the target uplink waveform as the DFT-S-OFDM waveform. In such an example, the uplink waveform may not be limited to the uplink waveform semi-statically configured by the network device for the terminal device.

In some embodiments, if an uplink waveform semi-statically configured by the network device for the terminal device by using RRC signalling is a DFT-S-OFDM waveform, the DFT-S-OFDM waveform is used regardless of whether the RSRP measured by the terminal device is greater than or less than the first threshold. That is, in this embodiment, even though the terminal device needs to measure the RSRP of the downlink signal, the DFT-S-OFDM waveform may always be used regardless of the measurement result RSRP.

In some embodiments, if an uplink waveform semi-statically configured by the network device for the terminal device by using RRC signalling is a DFT-S-OFDM waveform, the terminal device may directly use the semi-statically configured DFT-S-OFDM waveform without considering the measurement result RSRP.

In some embodiments, if an uplink waveform semi-statically configured by the network device for the terminal device by using RRC signalling is a CP-OFDM waveform, the terminal device may measure the RSRP of the downlink signal. If the RSRP measured by the terminal device is greater than (or is greater than or equal to) the first threshold (or referred to as an RSRP threshold), the terminal device may determine the target uplink waveform as the CP-OFDM waveform. If the RSRP measured by the terminal device is less than (or is less than or equal to) the first threshold, the terminal device may determine the target uplink waveform as the DFT-S-OFDM waveform. That is, the terminal device may dynamically perform switching between the CP-OFDM waveform and the DFT-S-OFDM waveform based on a value relationship between the RSRP and the first threshold.

In some embodiments, if an uplink waveform semi-statically configured by the network device for the terminal device by using RRC signalling is a CP-OFDM waveform, the terminal device may measure the RSRP of the downlink signal. If the RSRP measured by the terminal device is greater than (or is greater than or equal to) the first threshold (or referred to as an RSRP threshold), the terminal device may determine the target uplink waveform as the semi-statically configured waveform. If the RSRP measured by the terminal device is less than (or is less than or equal to) the first threshold, the terminal device may determine the target uplink waveform as the DFT-S-OFDM waveform.

In some embodiments, the first threshold mentioned above may be determined based on a threshold that is defined for or supported by some communications systems (for example, an NR system). For example, the first threshold may directly use an RSRP threshold that is already defined for or supported by some communications systems. Alternatively, the first threshold may be obtained by adjusting, according to a rule, an RSRP threshold that is defined for or supported by some communications systems.

For example, the first threshold is determined based on one or more of following:
rsrp-ThresholdSSB: an RSRP threshold used to select an SSB in a four-step random access process (4-step random access channel (random access channel, RACH));
rsrp-ThresholdCSI-RS: an RSRP threshold used to select a CSI-RS in a four-step random access process;
msgA-RSRP-ThresholdSSB: an RSRP threshold used to select an SSB in a two-step random access process (2-step RACH);
rsrp-ThresholdSSB-SUL: an RSRP threshold used for selection between a normal uplink (normal uplink, NUL) carrier and a supplementary uplink (supplementary uplink, SUL) carrier;
msgA-RSRP-Threshold: an RSRP threshold used for selection between a two-step random access process and a four-step random access process (when a random access resource of a two-step random access process and a random access resource of a four-step random access process are configured among random access resources in a UL BWP, the RSRP threshold is used to perform selection between the two-step random access process and the four-step random access process); or
rsrp-ThresholdMsg3: an RSRP threshold used for message 3 repetition (Msg3 repetition)

In some embodiments, the first threshold mentioned above may be a dedicated threshold related to "determining the uplink waveform". For example, the first threshold may include one or more of following thresholds: an RSRP threshold for determining whether to use the first uplink waveform (for example, the DFT-S-OFDM waveform) of the plurality of uplink waveforms; or an RSRP threshold for determining whether to determine a to-be-used uplink waveform from the plurality of uplink waveforms.

### Embodiment 1.2: Determining a target uplink waveform based on uplink coverage information

In some embodiments, the target uplink waveform may be determined based on uplink coverage information (or referred to as an uplink coverage condition, for example, uplink coverage performance) of a terminal device. For example, the uplink coverage information may include or indicate the uplink coverage performance of the terminal device. The uplink coverage information of the terminal device may be determined based on a measurement result of a downlink signal by the terminal device. An RSRP is used as an example. If the RSRP measured by the terminal device is lower, it indicates that the uplink coverage performance of the terminal device is worse. In this case, the terminal device determines a DFT-S-OFDM waveform as the target uplink waveform, to improve the uplink coverage performance. For a type of the downlink signal and a manner of using the measurement result of the downlink signal, refer to Embodiment 1.1. Details are not described herein again.

In some embodiments, the uplink coverage information of the terminal device may be determined by the terminal device. Compared with a manner in which a network device dynamically configures an uplink waveform (refer to descriptions in Embodiment 1.4 below), the terminal device determines a to-be-used uplink waveform based on the uplink coverage performance, which better meets a requirement of an actual communication environment.

In some embodiments, the uplink coverage information of the terminal device may alternatively be determined by the network device (for example, the uplink coverage condition of the terminal device is determined based on the RSRP). If the network device determines the uplink coverage information of the terminal device, the network device may dynamically indicate the target uplink beam of the terminal device in a manner similar to that in Embodiment 1.4 (see following).

### Embodiment 1.3: Determining a target uplink waveform based on a requirement on a data transmission throughput

For example, if a network device has a relatively high requirement on the data transmission throughput (for example, greater than or equal to a second threshold), a terminal device may determine a CP-OFDM waveform as the target uplink waveform.

For another example, if a network device has no high requirement on the data transmission throughput (for example, less than or equal to a second threshold), a terminal device may determine a DFT-S-OFDM waveform as the target uplink waveform.

### Embodiment 1.4: Determining a target uplink waveform based on dynamic indication information sent by a network device

In some embodiments, the dynamic indication information may be, for example, dynamic control information. The dynamic indication information may indicate an uplink waveform used when a terminal device performs uplink communication. Alternatively, the dynamic indication information may instruct a terminal device to perform switching with respect to a semi-statically configured uplink waveform when performing uplink communication. For example, if the semi-statically configured uplink waveform is a DFT-S-OFDM waveform, the network device may transmit the dynamic indication information. If receiving the indication information, the terminal device may switch the uplink waveform. That is, the terminal device may use a CP-OFDM waveform for uplink communication.

In some embodiments, the terminal device may use the uplink waveform of the dynamic indication information only for a single uplink scheduling. For uplink communication after the scheduling, the terminal device may determine the uplink waveform based on dynamic indication information received subsequently. Alternatively, for uplink communication after the scheduling, the terminal device may use a semi-statically configured uplink waveform.

In some embodiments, the dynamic indication information is current dynamic indication information, and before new dynamic indication information delivered by the network device is received, uplink transmission processes of the terminal device are all performed based on an uplink waveform indicated by the current dynamic indication information.

In some embodiments, the dynamic indication information may be carried in downlink control information (downlink control information, DCI). The dynamic indication information may be used to indicate an uplink waveform used for the terminal device. Alternatively, the dynamic indication information may be used to indicate whether the terminal device is to perform waveform switching.

In some embodiments, uplink communication of the terminal device is uplink communication scheduled based on first DCI. The first DCI is used to carry the dynamic indication information; or the first DCI is DCI transmitted before or after the DCI used to carry the dynamic indication information. That is, the network device may indicate an uplink waveform to the terminal device before transmitting scheduling signalling to the terminal device. Alternatively, after transmitting scheduling signalling to the terminal device, an uplink waveform may be indicated to the terminal device before the terminal device performs uplink communication.

In some embodiments, the dynamic indication information may be carried in an SSB. The dynamic indication information may be used to indicate an uplink waveform used by the terminal device. Alternatively, the dynamic indication information may be used to indicate whether the terminal device should perform waveform switching.

The dynamic indication information may be explicitly or implicitly carried in the SSB. In some embodiments, the dynamic indication information is a target DMRS sequence in the SSB. For example, the target DMRS sequence belongs to a target DMRS set among a plurality of DMRS sequence sets, where the plurality of DMRS sets are in a one-to-one correspondence with the plurality of uplink waveforms, and the target uplink waveform is an uplink waveform of the plurality of uplink waveforms that corresponds to the target DMRS set. In some embodiments, after dynamically indicating of a waveform is performed in the SSB, if the terminal device receives no new waveform indication information, uplink communication may always be performed by using a previously indicated waveform.

With reference to FIG. 3 again, the step described in step S310 may be determined through protocol predefinition, through preconfiguration, or through configuration performed by the network device. That is, whether the terminal device can determine the uplink waveform from the plurality of uplink waveforms may be determined through the protocol predefinition, through the preconfiguration, or through the configuration performed by the network device. The configuration performed by the network device mentioned herein may include one or more of following: semi-static configuration performed by the network device or dynamic configuration performed by the network device.

In some specific embodiments, the network device may perform semi-static configuration by using RRC signalling to allow that "the terminal device determines a to-be-used uplink waveform from the plurality of uplink waveforms". For example, a new control parameter may be introduced in the RRC signalling, to enable/disable that "the terminal determines the uplink waveform from the plurality of uplink waveforms". For another example, another parameter may be configured in the RRC signalling to implicitly indicate that "the terminal device determining the uplink waveform for uplink communication from the plurality of uplink waveforms" is allowed. In an example, an RSRP threshold may be configured in the RRC signalling to indicate that "the terminal device determining the uplink waveform for uplink communication from the plurality of uplink waveforms" is allowed. For example, if the RSRP threshold is configured in the RRC signalling, it indicates that "the terminal device determining the uplink waveform for uplink communication from the plurality of uplink waveforms" is allowed. For another example, if the RSRP threshold is not configured in the RRC signalling, it indicates that "the terminal device determining the uplink waveform for uplink communication from the plurality of uplink waveforms" is not allowed.

In some specific embodiments, the network device may configure, by using a dynamic control command (or referred to as control signalling), whether to allow that "the terminal device determines the uplink waveform for uplink communication from the plurality of uplink waveforms". For example, the dynamic control command may directly indicate whether to allow that "the terminal device determines the uplink waveform for uplink communication from the plurality of uplink waveforms". In an example, the dynamic control command may instruct, by using different bit values, the terminal device to enable/disable a function of "the terminal device determining the uplink waveform for uplink communication from the plurality of uplink waveforms". For scheduling-based uplink communication, it may be indicated, in signalling for scheduling uplink communication, whether to allow that "the terminal device determines the uplink waveform for uplink communication from the plurality of uplink waveforms". Alternatively, it may be indicated, before signalling for scheduling uplink communication, whether to allow that "the terminal device determines the uplink waveform for uplink communication from the plurality of uplink waveforms".

For example, when the terminal device receives the control command from the network device, if the control command allows that "the terminal device determines the uplink waveform for uplink communication from the plurality of uplink waveforms", the target uplink waveform used for uplink communication may be determined based on a relationship between a measured RSRP of a downlink signal and an RSRP threshold value.

In a possible implementation, when the terminal device receives the control signalling from the network device and determines that the network device supports that "the terminal device determines the uplink waveform for uplink communication from the plurality of uplink waveforms", the terminal device may determine the target uplink waveform based on a measurement result of the downlink signal. For example, when the measured RSRP is less than a first threshold, the terminal device may determine a DFT-S-OFDM waveform as the target uplink waveform. For another example, when the measured RSRP is greater than the RSRP threshold value, the terminal device may determine a CP-OFDM waveform as the target uplink waveform.

In another possible implementation, when the terminal device receives the control command from the network device and determines that the network device supports that "the terminal device determines the uplink waveform for uplink communication from the plurality of uplink waveforms", the terminal device may determine the uplink waveform (that is, the uplink waveform semi-statically configured by the network device) based on the semi-static configuration of the network device. If the uplink waveform is a DFT-S-OFDM waveform, the terminal device determines the DFT-S-OFDM waveform as the target uplink waveform. If a first uplink waveform is a CP-OFDM waveform, the terminal device may determine the target uplink waveform based on the measurement result of the downlink signal. For example, when the measured RSRP is less than the first threshold, the terminal device may determine a DFT-S-OFDM waveform as the target uplink waveform. For another example, when the measured RSRP is greater than the RSRP threshold value, the terminal device may determine a CP-OFDM waveform as the target uplink waveform.

In some embodiments, the technical solutions provided in embodiments of this application may be applicable to a random access process (such as a four-step random access process or a two-step random access process), scheduling-free uplink transmission (for example, a configured grant physical uplink shared channel (configured grant physical uplink shared channel, CG-PUSCH)), scheduling-based uplink transmission (for example, a dynamic grant physical uplink shared channel (dynamic grant physical uplink shared channel, DG-PUSCH)), and the like. For example, in the two-step random access process, the terminal device first transmits a message A (MsgA). In this case, there may be no indication from the network device. However, the terminal device may evaluate uplink coverage performance of the terminal device before communication. In this case, the terminal device may dynamically determine the uplink waveform, so that transmission performance of uplink data can be improved.

FIG. 4 shows a specific example of this embodiment of this application. As shown in FIG. 4, in step S410, a network device transmits an RSRP threshold (corresponding to the foregoing first threshold) to a terminal device. The RSRP threshold may be used by the terminal device to determine an uplink waveform for uplink communication from a plurality of uplink waveforms. In addition, optionally, the network device may also transmit a control command to the terminal device through step S420, to instruct the terminal device to enable a function of "determining the uplink waveform for uplink communication from the plurality of uplink waveforms". In step S430, the terminal device receives an uplink waveform semi-statically configured by the network device. For ease of description, in the example in FIG. 4, the waveform is referred to as an uplink waveform 1. Next, in step S440, the terminal device may measure an RSRP of a downlink signal, and compare the measured RSRP with an RSRP threshold. Finally, in step S450, the terminal device may determine, based on a comparison result between the RSRP and the RSRP threshold, whether to use an uplink waveform 1 for uplink communication or to use an uplink waveform 2 different from the uplink waveform 1 for uplink communication.

In some embodiments, after the terminal device determines the uplink waveform for uplink communication from the plurality of uplink waveforms, the network device may perform data reception processing through blind detection. That is, the network device may perform the data reception processing based on the plurality of uplink waveforms. Based on such an implementation, complexity of the reception processing by the network device is increased. To reduce the complexity of the reception processing by the network device, a solution may be further introduced. After the terminal device determines the uplink waveform for uplink communication from the plurality of uplink waveforms, the network device can determine, in a manner, the uplink waveform used by the terminal, and then perform the data reception processing based on the corresponding waveform. Two possible solutions are provided below with reference to Embodiment 2.

### Embodiment 2.1: A plurality of uplink waveforms corresponding to a plurality of uplink resources, respectively

Because the plurality of uplink waveforms correspond to the plurality of uplink resources, respectively, uplink communication with different waveforms may be performed based on the plurality of uplink resources.

In some embodiments, the uplink resource corresponding to the uplink waveform may refer to one or more of a time domain resource, a frequency domain resource, a spatial domain resource, or a code domain resource. For example, the uplink resource corresponding to the uplink waveform may refer to a time-frequency resource.

In some embodiments, the plurality of uplink resources may be configured by a network device (or preconfigured by a network device). Alternatively, the plurality of uplink resources may be scheduled by a network device.

For example, for a scheduling-free uplink communication process, the network device may semi-statically configure uplink resources corresponding to a plurality of waveforms.

For another example, for a scheduling-based uplink communication process, the network device may indicate uplink resources corresponding to a plurality of waveforms.

After a terminal device determines a target uplink waveform, uplink data transmission may be performed based on an uplink resource corresponding to the target uplink waveform. Accordingly, the network device may employ different uplink waveforms on the plurality of uplink resources, respectively, so as to perform corresponding signal reception processing.

In some embodiments, the uplink resources corresponding to the plurality of uplink waveforms may have an association relationship. Therefore, resource locations of the plurality of uplink resources may be determined based on an association relationship between the resource locations of the plurality of uplink resources. That is, an uplink resource of one uplink waveform may be obtained based on an uplink resource of another uplink waveform.

For example, an offset value exists between the uplink resources of the plurality of uplink waveforms. The offset value may be agreed upon by a protocol, semi-statically configured by the network device, or dynamically configured by the network device. The offset value may be, for example, a time domain offset value and/or a frequency domain offset value.

In an example, when the network device semi-statically configures an uplink waveform for the terminal device, a time-frequency resource 1 (for example, may include a semi-statically configured time-frequency resource for scheduling-free communication and a dynamically indicated time-frequency resource for scheduling-based communication) may be applicable to the uplink waveform. When an uplink waveform determined by the terminal device is the same as an uplink waveform semi-statically configured by the network device, the terminal device may perform communication based on the foregoing time-frequency resource. When an uplink waveform determined by the terminal device is different from an uplink waveform semi-statically configured by the network device, the terminal device may first determine a time-frequency resource 2 based on the offset value, and then perform uplink communication based on the time-frequency resource 2. When performing data reception processing, the network device employs signal reception processing corresponding to the waveforms on the two time-frequency resources.

### Embodiment 2.2: A terminal device transmitting, in advance, indication information used to indicate a target uplink waveform

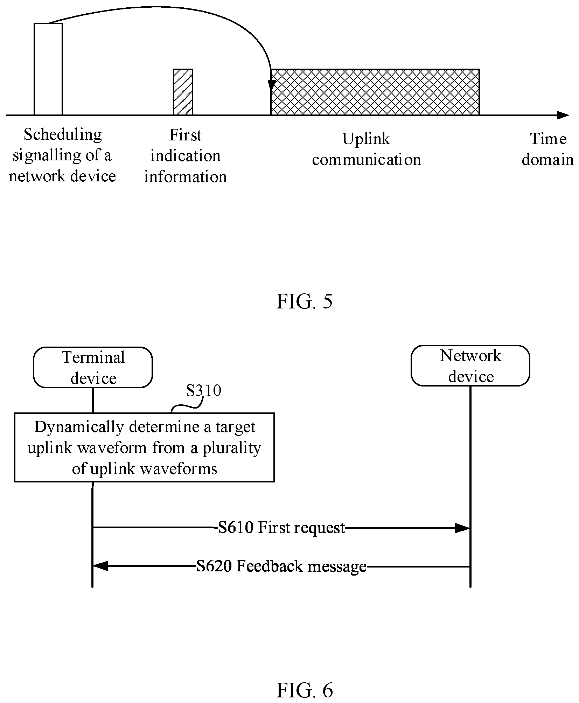

In some embodiments, as shown in FIG. 5, the terminal device may transmit first indication information (also referred to as waveform indication information or a waveform advance indication) to a network device before performing uplink communication with the network device by using the target uplink waveform. The first indication information may be used to indicate the target uplink waveform. In this case, the network device may learn the target uplink waveform in advance, so as to avoid that the network device needs to solve a plurality of waveforms through blind detection, or performs waveform determining processing in advance.

In some embodiments, the foregoing first indication information may be transmitted by means of uplink control information (uplink control information, UCI). That is, new UCI may be introduced to indicate that the terminal device determines the target uplink waveform from a plurality of uplink waveforms.

The first indication information may be transmitted in a case in which the target uplink waveform is consistent with and/or inconsistent with a semi-statically configured uplink waveform.

For example, when the target uplink waveform is inconsistent with the uplink waveform semi-statically configured by the network device, the terminal device may transmit the first indication information before performing uplink communication, to notify the network device to perform data reception processing by using a non-semi-statically configured waveform. When the target uplink waveform is consistent with the uplink waveform semi-statically configured by the network device, the terminal device may not transmit the first indication information.

For another example, when the target uplink waveform is inconsistent with the uplink waveform semi-statically configured by the network device, the terminal device may transmit the first indication information before performing uplink communication, to notify the network device to perform data reception processing by using a non-semi-statically configured waveform. When the target uplink waveform is consistent with the uplink waveform semi-statically configured by the network device, the terminal device may alternatively transmit the first indication information before performing uplink communication.

In some embodiments, a time domain resource for carrying the first indication information is a first time domain resource, and the first time domain resource may be based on configuration by the network device. The configuration by the network device mentioned herein may refer to semi-static configuration or dynamic configuration. If the dynamic configuration is used, the network device may configure the first indication information and uplink communication scheduling information in same signalling. Alternatively, the network device may configure the first indication information before scheduling signalling.

In some embodiments, the first time domain resource may be determined based on a time domain location of a second time domain resource. The second time domain resource is a time domain resource used for uplink communication. For example, the first time domain resource may be determined based on a location relationship between the first time domain resource and the second time domain resource. The location relationship between the first time domain resource and the second time domain resource mentioned herein may be determined through protocol predefinition or through configuration by the network device.

In some embodiments, if the implementation described in Embodiment 2.2 is used, for scheduling-based communication, it needs to be ensured that the time domain resource used to carry the first indication information exists between the time domain resource for the scheduling signalling of the network device and the time domain resource for the uplink communication scheduled based on the scheduling information.

In some embodiments, if the implementation described in Embodiment 2.2 is used, it does not need to be ensured that the time domain resource used to carry the first indication information exists between the time domain resource for the scheduling signalling of the network device and the time domain resource for the uplink communication scheduled based on the scheduling information. In this case, the terminal device may perform communication based on the uplink waveform semi-statically configured by the network device.

As shown in FIG. 6, after step S310, the terminal device may continue to perform step S610, that is, the terminal device transmits a first request to the network device. The first request may be used to request to switch an uplink waveform. Therefore, in some embodiments, the first request may alternatively be referred to as a waveform switching request. Through transmission of the first request, the network device may learn the uplink waveform, so as to avoid that the network device needs to solve a plurality of waveforms through blind detection, or performs waveform determining processing in advance.

In some embodiments, if a time domain resource used to carry the first request exists before uplink communication, the first request is transmitted on the time domain resource.

In some embodiments, if a time domain resource used to carry the first request does not exist before the time domain resource for the uplink communication, the first request is transmitted after the uplink communication. For example, the first request may be used to request to perform waveform switching for the next communication.

In some embodiments, if a time domain resource used to carry the first request does not exist before the time domain resource for the uplink communication, the uplink communication is performed based on a semi-statically configured uplink waveform.

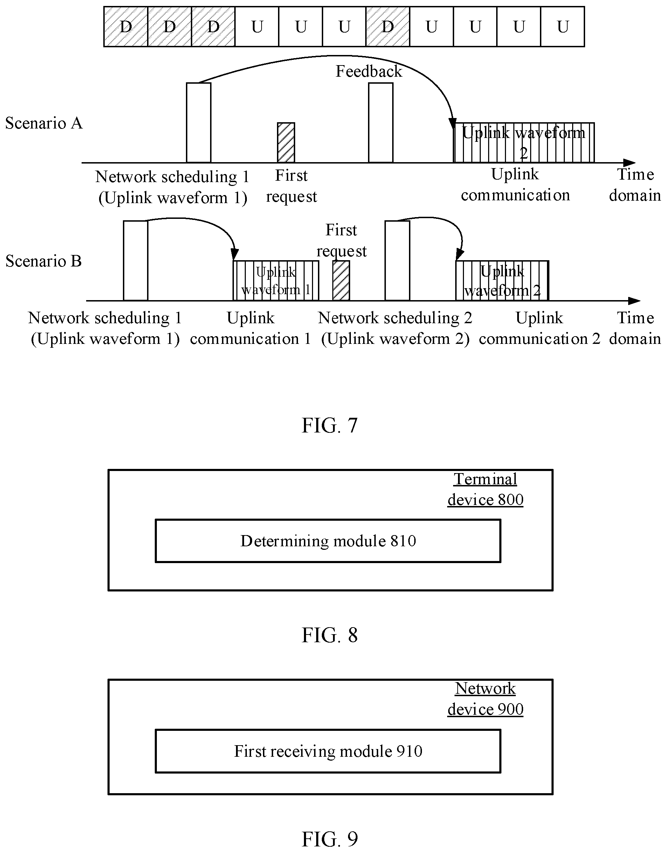

FIG. 7 is used as an example. In a scenario A, network scheduling 1 is used to schedule uplink communication. An uplink waveform semi-statically configured by a network device is an uplink waveform 1. Before uplink communication, because an uplink resource (in FIG. 7, an uplink subframe is represented by U, and a downlink subframe is represented by D, where a plurality of uplink subframes exist between the network scheduling 1 and uplink communication in a scenario 1) exists, the terminal device may transmit a first request by using the uplink resource, to request to switch the uplink waveform to an uplink waveform 2. After receiving a feedback transmitted by the network device (for example, waveform indication information, indicating that the network device allows the terminal device to switch the uplink waveform to the uplink waveform 2), the terminal device performs uplink communication by using the uplink waveform 2. In a scenario B, network scheduling 1 is used to schedule uplink communication 1. An uplink waveform semi-statically configured by the network device is an uplink waveform 1. Before the uplink communication, because no uplink resource (in a scenario 2 of FIG. 7, no uplink subframe exists between the network scheduling 1 and the uplink communication) exists, the terminal device may transmit the first request after the uplink communication 1, to request to switch the uplink waveform to an uplink waveform 2. It may be seen from the scenario B of FIG. 7 that the uplink waveform used in a subsequent scheduling process is the uplink waveform 2.

With reference to FIG. 6 again, in some embodiments, the method in FIG. 6 may further include step S620, that is, the terminal device receives a feedback message transmitted by the network device for the first request. The feedback message may be used to indicate whether the network device allows switching of the uplink waveform. For example, the feedback message may carry waveform indication information, and the waveform indication information may indicate a type of the uplink waveform, or may indicate whether the network device allows the switching of the uplink waveform. For example, the waveform indication information is acknowledgement (acknowledgement, ACK)/negative acknowledgement (negative acknowledgement, NACK). If the waveform indication information is ACK information, it indicates that the network device allows the switching of the uplink waveform. If the waveform indication information is NACK information, it indicates that the network device does not allow the switching of the uplink waveform.

In some embodiments, the time domain resource used to carry the first request may be configured by the network device. For example, the time-frequency resource may be semi-statically and/or dynamically configured by the network device.

In some embodiments, there may be an offset value (for example, a time domain offset value) between the time domain resource used to carry the first request and the time-frequency resource for uplink communication. The time domain resource used to carry the first request may be determined based on the offset value. The offset value may be agreed upon by a protocol, or configured by the network device.

The method embodiments of this application are described above in detail with reference to FIG. 1 to FIG. 7. Apparatus embodiments of this application are described below in detail with reference to FIG. 8 to FIG. 10. It should be understood that the descriptions of the method embodiments correspond to descriptions of the apparatus embodiments, and therefore, for parts that are not described in detail, refer to the foregoing method embodiments.

FIG. 8 is a schematic structural diagram of a terminal device according to an embodiment of this application. A terminal device 800 in FIG. 8 may include a determining module 810. The determining module 810 is configured to determine a target uplink waveform from a plurality of uplink waveforms, where the target uplink waveform is used for the terminal device to perform uplink communication with a network device.

In some embodiments, the target uplink waveform is determined based on one or more of following: a semi-statically configured uplink waveform; an uplink coverage information of the terminal device; a measurement result of a downlink signal by the terminal device; a requirement of the network device on a data transmission throughput; or dynamic indication information sent by the network device.

In some embodiments, the target uplink waveform is determined based on a relationship between the measurement result and a first threshold.

In some embodiments, if the measurement result is greater than or equal to the first threshold, the target uplink waveform is the semi-statically configured uplink waveform; and/or if the measurement result is less than or equal to the first threshold, and the semi-statically configured uplink waveform is not an expected uplink waveform for the terminal device, the target uplink waveform is the expected uplink waveform.

In some embodiments, if the measurement result is less than or equal to the first threshold, the target uplink waveform is a first uplink waveform in the plurality of uplink waveforms; and/or if the measurement result is greater than or equal to the first threshold, the target uplink waveform is a second uplink waveform in the plurality of uplink waveforms.

In some embodiments, the first threshold is determined based on one or more of following: an RSRP threshold used to select an SSB in a four-step random access process; an RSRP threshold used to select a CSI-RS in a four-step random access process; an RSRP threshold used to select an SSB in a two-step random access process; an RSRP threshold used for selection between an NUL carrier and an SUL carrier; an RSRP threshold used for selection between a two-step random access process and a four-step random access process; an RSRP threshold used for message 3 repetition; an RSRP threshold used for determining whether to use a first uplink waveform in the plurality of uplink waveforms; or an RSRP threshold for determining whether to determine a to-be-used uplink waveform from the plurality of uplink waveforms.

In some embodiments, the dynamic indication information is carried in DCI.

In some embodiments, the uplink communication is scheduled based on first DCI, where the first DCI is used to carry the dynamic indication information; or the first DCI is DCI transmitted before or after the DCI used to carry the dynamic indication information.

In some embodiments, an uplink waveform indicated by the dynamic indication information is used only for the uplink communication scheduled based on the first DCI.

In some embodiments, the dynamic indication information is carried in an SSB.

In some embodiments, the dynamic indication information is a target DMRS sequence in the SSB.

In some embodiments, the target DMRS sequence belongs to a target DMRS set among a plurality of DMRS sequence sets, the plurality of DMRS sets are in a one-to-one correspondence with the plurality of uplink waveforms, and the target uplink waveform is an uplink waveform of the plurality of uplink waveforms that corresponds to the target DMRS set.

In some embodiments, the dynamic indication information is current dynamic indication information, and before new dynamic indication information is received, uplink transmission processes of the terminal device are all performed based on an uplink waveform indicated by the current dynamic indication information.

In some embodiments, whether the terminal device determines a to-be-used uplink waveform from the plurality of uplink waveforms is configured in one or more of following manners: being semi-statically configured by the network device or being dynamically configured by the network device.

In some embodiments, the plurality of uplink waveforms correspond to a plurality of uplink resources, respectively.

In some embodiments, the plurality of uplink resources are configured by the network device or scheduled by the network device.

In some embodiments, resource locations of the plurality of uplink resources are determined based on an association relationship between the resource locations of the plurality of uplink resources.

In some embodiments, the terminal device 800 further includes: a first transmitting module, configured to: before communicating with the network device by using the target uplink waveform, transmit first indication information to the network device, where the first indication information is used to indicate the target uplink waveform.

In some embodiments, the first indication information is transmitted in a case in which the target uplink waveform is consistent with and/or inconsistent with a semi-statically configured uplink waveform.

In some embodiments, a time domain resource used to carry the first indication information is a first time domain resource, and the first time domain resource is determined based on one or more of following manners: being configured by the network device; or a time domain location of a second time domain resource, where the second time domain resource is a time domain resource used for the uplink communication.

In some embodiments, a location relationship between the first time domain resource and the second time domain resource is determined through protocol predefinition or through configuration by the network device.

In some embodiments, the terminal device 800 may further include: a second transmitting module, configured to: after the terminal device determines the target uplink waveform from the plurality of uplink waveforms, transmit a first request to the network device, where the first request is used to request to switch an uplink waveform.

In some embodiments, the terminal device 800 may further include: a first receiving module, configured to receive a feedback message transmitted by the network device for the first request, where the feedback message is used to indicate whether the network device allows the switching of the uplink waveform.

In some embodiments, if a time domain resource used to carry the first request exists before a time domain resource for the uplink communication, the first request is transmitted before the uplink communication; and/or if a time domain resource used to carry the first request does not exist before a time domain resource for the uplink communication, the first request is transmitted after the uplink communication.

In some embodiments, if a time domain resource used to carry the first request does not exist before a time domain resource for the uplink communication, the uplink communication is performed based on a semi-statically configured uplink waveform.

In some embodiments, the plurality of uplink waveforms include a first uplink waveform and a second uplink waveform, the first uplink waveform is a DFT-S-OFDM waveform, and the second uplink waveform is a CP-OFDM waveform.

In some embodiments, the target uplink waveform is dynamically determined by the terminal device from the plurality of uplink waveforms.

In some embodiments, the terminal device further includes: a second receiving module, configured to: before the terminal device determines the target uplink waveform from the plurality of uplink waveforms, receive configuration information from the network device, where the configuration information is used to indicate whether the terminal device determines a to-be-used uplink waveform from the plurality of uplink waveforms.

FIG. 9 is a schematic structural diagram of a network device according to an embodiment of this application. A network device 900 in FIG. 9 includes a first receiving module 910. The first receiving module 910 may be configured to receive uplink data of a terminal device based on a target uplink waveform, where the target uplink waveform is a waveform that is determined by the terminal device from a plurality of uplink waveforms and that is used for uplink communication with the network device.

In some embodiments, the target uplink waveform is determined based on one or more of following: a semi-statically configured uplink waveform; an uplink coverage information of the terminal device; a measurement result of a downlink signal by the terminal device; a requirement of the network device on a data transmission throughput; or dynamic indication information sent by the network device.

In some embodiments, the target uplink waveform is determined based on a relationship between the measurement result and a first threshold.

In some embodiments, if the measurement result is greater than or equal to the first threshold, the target uplink waveform is the semi-statically configured uplink waveform; and/or if the measurement result is less than or equal to the first threshold, and the semi-statically configured uplink waveform is not an expected uplink waveform for the terminal device, the target uplink waveform is the expected uplink waveform.

In some embodiments, if the measurement result is less than or equal to the first threshold, the target uplink waveform is a first uplink waveform in the plurality of uplink waveforms; and/or if the measurement result is greater than or equal to the first threshold, the target uplink waveform is a second uplink waveform in the plurality of uplink waveforms.

In some embodiments, the first threshold is determined based on one or more of following: an RSRP threshold used to select an SSB in a four-step random access process; an RSRP threshold used to select a channel state information reference signal CSI-RS in a four-step random access process; an RSRP threshold used to select an SSB in a -step random access process; an RSRP threshold used for selection between an NUL carrier and an SUL carrier; an RSRP threshold used for selection between a two-step random access process and a four-step random access process; an RSRP threshold used for message 3 repetition; an RSRP threshold used for determining whether to use a first uplink waveform in the plurality of uplink waveforms; or an RSRP threshold for determining whether to determine a to-be-used uplink waveform from the plurality of uplink waveforms.

In some embodiments, the dynamic indication information is carried in DCI.

In some embodiments, the uplink communication is scheduled based on first DCI, where the first DCI is used to carry the dynamic indication information; or the first DCI is DCI transmitted before or after the DCI used to carry the dynamic indication information.

In some embodiments, an uplink waveform indicated by the dynamic indication information is used only for the uplink communication scheduled based on the first DCI.

In some embodiments, the dynamic indication information is carried in an SSB.

In some embodiments, the dynamic indication information is a target DMRS sequence in the SSB.

In some embodiments, the target DMRS sequence belongs to a target DMRS set among a plurality of DMRS sequence sets, the plurality of DMRS sets are in a one-to-one correspondence with the plurality of uplink waveforms, and the target uplink waveform is an uplink waveform of the plurality of uplink waveforms that corresponds to the target DMRS set.

In some embodiments, the dynamic indication information is current dynamic indication information, and before new dynamic indication information is received, uplink transmission processes of the terminal device are all performed based on an uplink waveform indicated by the current dynamic indication information.

In some embodiments, whether the terminal device determines a to-be-used uplink waveform from the plurality of uplink waveforms is configured in one or more of following manners: being semi-statically configured by the network device or being dynamically configured by the network device.

In some embodiments, the plurality of uplink waveforms correspond to a plurality of uplink resources, respectively.

In some embodiments, the plurality of uplink resources are configured by the network device or scheduled by the network device.

In some embodiments, resource locations of the plurality of uplink resources are determined based on an association relationship between the resource locations of the plurality of uplink resources.

In some embodiments, the network device 900 may further include: a second receiving module, configured to: before communication with the network device is performed by using the target uplink waveform, receive first indication information from the terminal device, where the first indication information is used to indicate the target uplink waveform.

In some embodiments, the first indication information is transmitted in a case in which the target uplink waveform is consistent with and/or inconsistent with a semi-statically configured uplink waveform.

In some embodiments, a time domain resource used to carry the first indication information is a first time domain resource, and the first time domain resource is determined based on one or more of following manners: being configured by the network device; or a time domain location of a second time domain resource, where the second time domain resource is a time domain resource used for the uplink communication.

In some embodiments, a location relationship between the first time domain resource and the second time domain resource is determined through protocol predefinition or through configuration by the network device.

In some embodiments, the network device 900 may further include: a third receiving module, configured to: after the network device receives the target uplink waveform, receive a first request from the terminal device, where the first request is used to request to switch an uplink waveform.

In some embodiments, the network device 900 may further include: a first transmitting module, configured to transmit a feedback message for the first request to the terminal device, where the feedback message is used to indicate whether the network device allows switching of the uplink waveform.

In some embodiments, if a time domain resource used to carry the first request exists before a time domain resource for the uplink communication, the first request is transmitted before the uplink communication; and/or if a time domain resource used to carry the first request does not exist before a time domain resource for the uplink communication, the first request is transmitted after the uplink communication.

In some embodiments, if a time domain resource used to carry the first request does not exist before a time domain resource for the uplink communication, the uplink communication is performed based on a semi-statically configured uplink waveform.

In some embodiments, the plurality of uplink waveforms include a first uplink waveform and a second uplink waveform, the first uplink waveform is a DFT-S-OFDM waveform, and the second uplink waveform is a CP-OFDM waveform.

In some embodiments, the target uplink waveform is dynamically determined by the terminal device from the plurality of uplink waveforms.

In some embodiments, the network device further includes: a second transmitting module, configured to: before the network device receives the uplink data of the terminal device based on the target uplink waveform, transmit configuration information to the terminal device, where the configuration information is used to indicate whether the terminal device determines a to-be-used uplink waveform from the plurality of uplink waveforms.

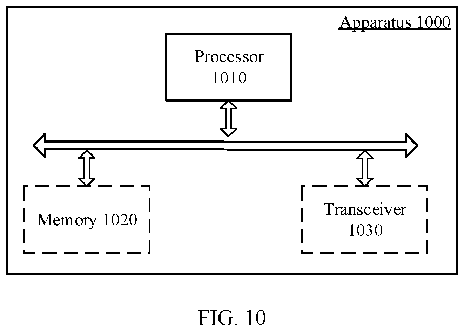

FIG. 10 is a schematic structural diagram of an apparatus according to an embodiment of this application. Dashed lines in FIG. 10 indicate that a unit or module is optional. The apparatus 1000 may be configured to implement the methods described in the foregoing method embodiments. The apparatus 1000 may be a chip or a communications device. The communications device may be, for example, a terminal device or a network device mentioned above.

The apparatus 1000 may include one or more processors 1010. The processor 1010 may support the apparatus 1000 in implementing the methods described in the foregoing method embodiments. The processor 1010 may be a general-purpose processor or a dedicated processor. For example, the processor may be a central processing unit (central processing unit, CPU). Alternatively, the processor 1010 may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1000 may further include one or more memories 1020. The memory 1020 stores a program thereon. The program may be executed by the processor 1010, so that the processor 1010 performs the methods described in the foregoing method embodiments. The memory 1020 may be independent of the processor 1010 or may be integrated into the processor 1010.

The apparatus 1000 may further include a transceiver 1030. The processor 1010 may communicate with another device or chip by using the transceiver 1030. For example, the processor 1010 may transmit data to and receive data from another device or chip by using the transceiver 1030.

An embodiment of this application further provides a computer-readable storage medium for storing a program. The computer-readable storage medium may be applied to the communications device provided in embodiments of this application, and the program causes a computer to perform the methods to be performed by the communications device in various embodiments of this application.

An embodiment of this application further provides a computer program product. The computer program product includes a program. The computer program product may be applied to the communications device provided in embodiments of this application, and the program causes a computer to perform the methods to be performed by the communications device in various embodiments of this application.

An embodiment of this application further provides a computer program. The computer program may be applied to the terminal device or the network device provided in embodiments of this application, and the computer program causes a computer to perform the methods performed by the communications device in various embodiments of this application.

It should be understood that, the "indication" mentioned in embodiments of this application may be a direct indication or an indirect indication, or indicate an association. For example, "A indicates B" may mean that A indicates B directly, where for example, B may be obtained by using A; may mean that A indicates B indirectly, where for example, A indicates C, and B may be obtained by using C; or may mean that there is an association between A and B.

In the descriptions of embodiments of this application, the term "corresponding" may mean that there is a direct or indirect correspondence between two elements, or that there is an association between two elements, or that there is a relationship of "indicating" and "being indicated", "configuring" and "being configured", or the like.

"Configured" in embodiments of this application may include being configured by using at least one of a system message, radio resource control (radio resource control, RRC) signalling, or a medium access control control element (media access control control element, MAC CE).

In some embodiments of this application, "predefined" or "preset" may be implemented by pre-storing corresponding codes, tables, or other forms that can be used to indicate related information in devices (for example, including the terminal device and the network device), and a specific implementation thereof is not limited in this application. For example, being predefined may refer to being defined in a protocol.

In some embodiments of this application, the "protocol" may refer to a standard protocol in the communications field, which may include, for example, an LTE protocol, an NR protocol, and a related protocol applied to a future communications system. This is not limited in this application.

It should be understood that, in this specification, the term "and/or" is merely an association relationship that describes associated objects, and represents that there may be three relationships. For example, A and/or B may represent three cases: only A exists, both A and B exist, and only B exists. In addition, the character "/" herein generally indicates an "or" relationship between the associated objects.

It should be understood that, in embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented as indirect couplings or communication connections through some interfaces, apparatuses or units, and may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
determining, by a terminal device, a target uplink waveform from a plurality of uplink waveforms, wherein the target uplink waveform is used for the terminal device to perform uplink communication with a network device.

2. The method according to claim 1, wherein the target uplink waveform is determined based on one or more of following:
a semi-statically configured uplink waveform;
uplink coverage information of the terminal device;
a measurement result of a downlink signal by the terminal device;
a requirement of the network device on a data transmission throughput; or
dynamic indication information transmitted by the network device.

3. The method according to claim 2, wherein the target uplink waveform is determined based on a relationship between the measurement result and a first threshold.

4. The method according to claim 3, wherein
if the measurement result is greater than or equal to the first threshold, the target uplink waveform is a semi-statically configured uplink waveform; and/or
if the measurement result is less than or equal to the first threshold, and the semi-statically configured uplink waveform is not an expected uplink waveform for the terminal device, the target uplink waveform is the expected uplink waveform.

5. The method according to claim 3, wherein
if the measurement result is less than or equal to the first threshold, the target uplink waveform is a first uplink waveform in the plurality of uplink waveforms; and/or
if the measurement result is greater than or equal to the first threshold, the target uplink waveform is a second uplink waveform in the plurality of uplink waveforms.

6. The method according to any one of claims 3 to 5, wherein the first threshold is determined based on one or more of following:
a reference signal received power RSRP threshold used to select a synchronization signal block SSB in a four-step random access process;
an RSRP threshold used to select a channel state information reference signal CSI-RS in a four-step random access process;
an RSRP threshold used to select an SSB in a two-step random access process;
an RSRP threshold used for selection between a normal uplink NUL carrier and a supplementary uplink SUL carrier;
an RSRP threshold used for selection between a two-step random access process and a four-step random access process;
an RSRP threshold used for message 3 repetition;
an RSRP threshold used for determining whether to use a first uplink waveform in the plurality of uplink waveforms; or
an RSRP threshold used for determining whether to determine a to-be-used uplink waveform from the plurality of uplink waveforms.

7. The method according to any one of claims 2 to 6, wherein the dynamic indication information is carried in downlink control information DCI.

8. The method according to claim 7, wherein the uplink communication is scheduled based on first DCI, wherein the first DCI is used to carry the dynamic indication information, or the first DCI is DCI transmitted before or after the DCI used to carry the dynamic indication information.

9. The method according to claim 8, wherein an uplink waveform indicated by the dynamic indication information is used only for the uplink communication scheduled based on the first DCI.

10. The method according to any one of claims 2 to 6, wherein the dynamic indication information is carried in an SSB.

11. The method according to claim 10, wherein the dynamic indication information is a target DMRS sequence in the SSB.

12. The method according to claim 11, wherein the target DMRS sequence belongs to a target DMRS set among a plurality of DMRS sequence sets, the plurality of DMRS sets are in a one-to-one correspondence with the plurality of uplink waveforms, and the target uplink waveform is an uplink waveform of the plurality of uplink waveforms that corresponds to the target DMRS set.

13. The method according to any one of claims 2 to 12, wherein the dynamic indication information is current dynamic indication information, and before new dynamic indication information is received, uplink transmission processes of the terminal device are all performed based on an uplink waveform indicated by the current dynamic indication information.

14. The method according to any one of claims 1 to 13, wherein the plurality of uplink waveforms correspond to a plurality of uplink resources, respectively.

15. The method according to claim 14, wherein the plurality of uplink resources are configured by the network device or scheduled by the network device.

16. The method according to claim 14, wherein resource locations of the plurality of uplink resources are determined based on an association relationship between the resource locations of the plurality of uplink resources.

17. The method according to any one of claims 1 to 16, wherein the method further comprises:
before communicating with the network device by using the target uplink waveform, transmitting, by the terminal device, first indication information to the network device, wherein the first indication information is used to indicate the target uplink waveform.

18. The method according to claim 17, wherein the first indication information is transmitted in a case in which the target uplink waveform is consistent with and/or inconsistent with a semi-statically configured uplink waveform.

19. The method according to claim 17 or 18, wherein a time domain resource used to carry the first indication information is a first time domain resource, and the first time domain resource is determined based on one or more of following manners:
being configured by the network device; or
a time domain location of a second time domain resource, wherein the second time domain resource is a time domain resource used for the uplink communication.

20. The method according to claim 19, wherein a location relationship between the first time domain resource and the second time domain resource is determined through protocol predefinition or through configuration by the network device.

21. The method according to any one of claims 1 to 20, wherein after the determining, by a terminal device, a target uplink waveform from a plurality of uplink waveforms, the method further comprises:
transmitting, by the terminal device, a first request to the network device, wherein the first request is used to request to switch an uplink waveform.

22. The method according to claim 21, wherein the method further comprises:
receiving, by the terminal device, a feedback message transmitted by the network device for the first request, wherein the feedback message is used to indicate whether the network device allows the switching of the uplink waveform.

23. The method according to claim 21 or 22, wherein
if a time domain resource used to carry the first request exists before a time domain resource for the uplink communication, the first request is transmitted before the uplink communication; and/or
if a time domain resource used to carry the first request does not exist before a time domain resource for the uplink communication, the first request is transmitted after the uplink communication.

24. The method according to any one of claims 21 to 23, wherein
if a time domain resource used to carry the first request does not exist before a time domain resource for the uplink communication, the uplink communication is performed based on a semi-statically configured uplink waveform.

25. The method according to any one of claims 1 to 24, wherein the plurality of uplink waveforms comprise a first uplink waveform and a second uplink waveform, the first uplink waveform is a Fourier transform-spread-orthogonal frequency division multiplexing DFT-S-OFDM waveform, and the second uplink waveform is a cyclic prefix orthogonal frequency division multiplexing CP-OFDM waveform.

26. The method according to any one of claims 1 to 25, wherein the target uplink waveform is dynamically determined by the terminal device from the plurality of uplink waveforms.

27. The method according to any one of claims 1 to 26, wherein before the determining, by a terminal device, a target uplink waveform from a plurality of uplink waveforms, the method further comprises:
receiving, by the terminal device, configuration information from the network device, wherein the configuration information is used to indicate whether the terminal device determines a to-be-used uplink waveform from the plurality of uplink waveforms.

28. A wireless communication method, comprising:
receiving, by a network device, uplink data of a terminal device based on a target uplink waveform, wherein the target uplink waveform is a waveform that is determined by the terminal device from a plurality of uplink waveforms and is used to perform uplink communication with the network device.

29. The method according to claim 28, wherein the target uplink waveform is determined based on one or more of following:
a semi-statically configured uplink waveform;
uplink coverage information of the terminal device;
a measurement result of a downlink signal by the terminal device;
a requirement of the network device on a data transmission throughput; or
dynamic indication information transmitted by the network device.

30. The method according to claim 29, wherein the target uplink waveform is determined based on a relationship between the measurement result and a first threshold.

31. The method according to claim 30, wherein
if the measurement result is greater than or equal to the first threshold, the target uplink waveform is a semi-statically configured uplink waveform; and/or
if the measurement result is less than or equal to the first threshold, and the semi-statically configured uplink waveform is not an expected uplink waveform for the terminal device, the target uplink waveform is the expected uplink waveform.

32. The method according to claim 30, wherein
if the measurement result is less than or equal to the first threshold, the target uplink waveform is a first uplink waveform in the plurality of uplink waveforms; and/or
if the measurement result is greater than or equal to the first threshold, the target uplink waveform is a second uplink waveform in the plurality of uplink waveforms.

33. The method according to any one of claims 30 to 32, wherein the first threshold is determined based on one or more of following:
a reference signal received power RSRP threshold used to select a synchronization signal block SSB in a four-step random access process;
an RSRP threshold used to select a channel state information reference signal CSI-RS in a four-step random access process;
an RSRP threshold used to select an SSB in a two-step random access process;
an RSRP threshold used for selection between a normal uplink NUL carrier and a supplementary uplink SUL carrier;
an RSRP threshold used for selection between a two-step random access process and a four-step random access process;
an RSRP threshold used for message 3 repetition;
an RSRP threshold used for determining whether to use a first uplink waveform in the plurality of uplink waveforms; or
an RSRP threshold used for determining whether to determine a to-be-used uplink waveform from the plurality of uplink waveforms.

34. The method according to any one of claims 29 to 33, wherein the dynamic indication information is carried in downlink control information DCI.

35. The method according to claim 34, wherein the uplink communication is scheduled based on first DCI, wherein the DCI used to carry the dynamic indication information is the first DCI, or the DCI used to carry the dynamic indication information is DCI transmitted before or after the first DCI.

36. The method according to claim 35, wherein an uplink waveform indicated by the dynamic indication information is used only for the uplink communication scheduled based on the first DCI.

37. The method according to any one of claims 29 to 33, wherein the dynamic indication information is carried in an SSB.

38. The method according to claim 37, wherein the dynamic indication information is a target DMRS sequence in the SSB.

39. The method according to claim 38, wherein the target DMRS sequence belongs to a target DMRS set among a plurality of DMRS sequence sets, the plurality of DMRS sets are in a one-to-one correspondence with the plurality of uplink waveforms, and the target uplink waveform is an uplink waveform of the plurality of uplink waveforms that corresponds to the target DMRS set.

40. The method according to any one of claims 29 to 39, wherein the dynamic indication information is current dynamic indication information, and before new dynamic indication information is received, uplink transmission processes of the terminal device are all performed based on an uplink waveform indicated by the current dynamic indication information.

41. The method according to any one of claims 28 to 40, wherein the plurality of uplink waveforms correspond to a plurality of uplink resources, respectively.

42. The method according to claim 41, wherein the plurality of uplink resources are configured by the network device or scheduled by the network device.

43. The method according to claim 41, wherein resource locations of the plurality of uplink resources are determined based on an association relationship between the resource locations of the plurality of uplink resources.

44. The method according to any one of claims 29 to 43, wherein the method further comprises:
before communication with the network device is performed by using the target uplink waveform, receiving, by the network device, first indication information from the terminal device, wherein the first indication information is used to indicate the target uplink waveform.

45. The method according to claim 44, wherein the first indication information is transmitted in a case in which the target uplink waveform is consistent with and/or inconsistent with a semi-statically configured uplink waveform.

46. The method according to claim 44 or 45, wherein a time domain resource used to carry the first indication information is a first time domain resource, and the first time domain resource is determined based on one or more of following manners:
being configured by the network device; or
a time domain location of a second time domain resource, wherein the second time domain resource is a time domain resource used for the uplink communication.

47. The method according to claim 46, wherein a location relationship between the first time domain resource and the second time domain resource is determined through protocol predefinition or through configuration by the network device.

48. The method according to any one of claims 28 to 47, wherein after the network device receives the target uplink waveform, the method further comprises:
receiving, by the network device, a first request from the terminal device, wherein the first request is used to request to switch an uplink waveform.

49. The method according to claim 48, wherein the method further comprises:
transmitting, by the network device, a feedback message for the first request to the terminal device, wherein the feedback message is used to indicate whether the network device allows the switching of the uplink waveform.

50. The method according to claim 48 or 49, wherein
if a time domain resource used to carry the first request exists before a time domain resource for the uplink communication, the first request is transmitted before the uplink communication; and/or
if a time domain resource used to carry the first request does not exist before a time domain resource for the uplink communication, the first request is transmitted after the uplink communication.

51. The method according to any one of claims 48 to 50, wherein
if a time domain resource used to carry the first request does not exist before a time domain resource for the uplink communication, the uplink communication is performed based on a semi-statically configured uplink waveform.

52. The method according to any one of claims 28 to 51, wherein the plurality of uplink waveforms comprise a first uplink waveform and a second uplink waveform, the first uplink waveform is a Fourier transform-spread-orthogonal frequency division multiplexing DFT-S-OFDM waveform, and the second uplink waveform is a cyclic prefix orthogonal frequency division multiplexing CP-OFDM waveform.

53. The method according to any one of claims 28 to 52, wherein the target uplink waveform is dynamically determined by the terminal device from the plurality of uplink waveforms.

54. The method according to any one of claims 28 to 53, wherein before the receiving, by a network device, uplink data of a terminal device based on a target uplink waveform, the method further comprises:
transmitting, by the network device, configuration information to the terminal device, wherein the configuration information is used to indicate whether the terminal device determines a to-be-used uplink waveform from the plurality of uplink waveforms.

55. A terminal device, comprising:
a determining module, configured to determine a target uplink waveform from a plurality of uplink waveforms, wherein the target uplink waveform is used for the terminal device to perform uplink communication with a network device.

56. The terminal device according to claim 55, wherein the target uplink waveform is determined based on one or more of following:
a semi-statically configured uplink waveform;
uplink coverage information of the terminal device;
a measurement result of a downlink signal by the terminal device;
a requirement of the network device on a data transmission throughput; or
dynamic indication information transmitted by the network device.

57. The terminal device according to claim 56, wherein the target uplink waveform is determined based on a relationship between the measurement result and a first threshold.

58. The terminal device according to claim 57, wherein
if the measurement result is greater than or equal to the first threshold, the target uplink waveform is a semi-statically configured uplink waveform; and/or
if the measurement result is less than or equal to the first threshold, and the semi-statically configured uplink waveform is not an expected uplink waveform for the terminal device, the target uplink waveform is the expected uplink waveform.

59. The terminal device according to claim 57, wherein
if the measurement result is less than or equal to the first threshold, the target uplink waveform is a first uplink waveform in the plurality of uplink waveforms; and/or
if the measurement result is greater than or equal to the first threshold, the target uplink waveform is a second uplink waveform in the plurality of uplink waveforms.

60. The terminal device according to any one of claims 57 to 59, wherein the first threshold is determined based on one or more of following:
a reference signal received power RSRP threshold used to select a synchronization signal block SSB in a four-step random access process;
an RSRP threshold used to select a channel state information reference signal CSI-RS in a four-step random access process;
an RSRP threshold used to select an SSB in a two-step random access process;
an RSRP threshold used for selection between a normal uplink NUL carrier and a supplementary uplink SUL carrier;
an RSRP threshold used for selection between a two-step random access process and a four-step random access process;
an RSRP threshold used for message 3 repetition;
an RSRP threshold used for determining whether to use a first uplink waveform in the plurality of uplink waveforms; or
an RSRP threshold used for determining whether to determine a to-be-used uplink waveform from the plurality of uplink waveforms.

61. The terminal device according to any one of claims 56 to 60, wherein the dynamic indication information is carried in downlink control information DCI.

62. The terminal device according to claim 61, wherein the uplink communication is scheduled based on first DCI, wherein the DCI used to carry the dynamic indication information is the first DCI, or the DCI used to carry the dynamic indication information is DCI transmitted before or after the first DCI.

63. The terminal device according to claim 62, wherein an uplink waveform indicated by the dynamic indication information is used only for the uplink communication scheduled based on the first DCI.

64. The terminal device according to any one of claims 56 to 60, wherein the dynamic indication information is carried in an SSB.

65. The terminal device according to claim 64, wherein the dynamic indication information is a target DMRS sequence in the SSB.

66. The terminal device according to claim 65, wherein the target DMRS sequence belongs to a target DMRS set among a plurality of DMRS sequence sets, the plurality of DMRS sets are in a one-to-one correspondence with the plurality of uplink waveforms, and the target uplink waveform is an uplink waveform of the plurality of uplink waveforms that corresponds to the target DMRS set.

67. The terminal device according to any one of claims 56 to 66, wherein the dynamic indication information is current dynamic indication information, and before new dynamic indication information is received, uplink transmission processes of the terminal device are all performed based on an uplink waveform indicated by the current dynamic indication information.

68. The terminal device according to any one of claims 55 to 67, wherein the plurality of uplink waveforms correspond to a plurality of uplink resources, respectively.

69. The terminal device according to claim 68, wherein the plurality of uplink resources are configured by the network device or scheduled by the network device.

70. The terminal device according to claim 68, wherein resource locations of the plurality of uplink resources are determined based on an association relationship between the resource locations of the plurality of uplink resources.

71. The terminal device according to any one of claims 55 to 70, wherein the terminal device further comprises:
a first transmitting module, configured to: before communicating with the network device by using the target uplink waveform, transmit first indication information to the network device, wherein the first indication information is used to indicate the target uplink waveform.

72. The terminal device according to claim 71, wherein the first indication information is transmitted in a case in which the target uplink waveform is consistent with and/or inconsistent with a semi-statically configured uplink waveform.

73. The terminal device according to claim 71 or 72, wherein a time domain resource used to carry the first indication information is a first time domain resource, and the first time domain resource is determined based on one or more of following manners:
being configured by the network device; or
a time domain location of a second time domain resource, wherein the second time domain resource is a time domain resource used for the uplink communication.

74. The terminal device according to claim 73, wherein a location relationship between the first time domain resource and the second time domain resource is determined through protocol predefinition or through configuration by the network device.

75. The terminal device according to any one of claims 55 to 74, wherein the terminal device further comprises:
a second transmitting module, configured to: after the terminal device determines the target uplink waveform from the plurality of uplink waveforms, transmit a first request to the network device, wherein the first request is used to request to switch an uplink waveform.

76. The terminal device according to claim 75, wherein the terminal device further comprises:
a first receiving module, configured to receive a feedback message transmitted by the network device for the first request, wherein the feedback message is used to indicate whether the network device allows the switching of the uplink waveform.

77. The terminal device according to claim 75 or 76, wherein
if a time domain resource used to carry the first request exists before a time domain resource for the uplink communication, the first request is transmitted before the uplink communication; and/or
if a time domain resource used to carry the first request does not exist before a time domain resource for the uplink communication, the first request is transmitted after the uplink communication.

78. The terminal device according to any one of claims 75 to 77, wherein
if a time domain resource used to carry the first request does not exist before a time domain resource for the uplink communication, the uplink communication is performed based on a semi-statically configured uplink waveform.

79. The terminal device according to any one of claims 55 to 78, wherein the plurality of uplink waveforms comprise a first uplink waveform and a second uplink waveform, the first uplink waveform is a Fourier transform-spread-orthogonal frequency division multiplexing DFT-S-OFDM waveform, and the second uplink waveform is a cyclic prefix orthogonal frequency division multiplexing CP-OFDM waveform.

80. The terminal device according to any one of claims 55 to 79, wherein the target uplink waveform is dynamically determined by the terminal device from the plurality of uplink waveforms.

81. The terminal device according to any one of claims 55 to 80, wherein the terminal device further comprises:
a second receiving module, configured to: before the terminal device determines the target uplink waveform from the plurality of uplink waveforms, receive configuration information from the network device, wherein the configuration information is used to indicate whether the terminal device determines a to-be-used uplink waveform from the plurality of uplink waveforms.

82. A network device, comprising:
a first receiving module, configured to receive uplink data of a terminal device based on a target uplink waveform, wherein the target uplink waveform is a waveform that is determined by the terminal device from a plurality of uplink waveforms and is used to perform uplink communication with the network device.

83. The network device according to claim 82, wherein the target uplink waveform is determined based on one or more of following:
a semi-statically configured uplink waveform;
uplink coverage information of the terminal device;
a measurement result of a downlink signal by the terminal device;
a requirement of the network device on a data transmission throughput; or
dynamic indication information transmitted by the network device.

84. The network device according to claim 83, wherein the target uplink waveform is determined based on a relationship between the measurement result and a first threshold.

85. The network device according to claim 84, wherein
if the measurement result is greater than or equal to the first threshold, the target uplink waveform is a semi-statically configured uplink waveform; and/or
if the measurement result is less than or equal to the first threshold, and the semi-statically configured uplink waveform is not an expected uplink waveform for the terminal device, the target uplink waveform is the expected uplink waveform.

86. The network device according to claim 84, wherein
if the measurement result is less than or equal to the first threshold, the target uplink waveform is a first uplink waveform in the plurality of uplink waveforms; and/or
if the measurement result is greater than or equal to the first threshold, the target uplink waveform is a second uplink waveform in the plurality of uplink waveforms.

87. The network device according to any one of claims 84 to 86, wherein the first threshold is determined based on one or more of following:
a reference signal received power RSRP threshold used to select a synchronization signal block SSB in a four-step random access process;
an RSRP threshold used to select a channel state information reference signal CSI-RS in a four-step random access process;
an RSRP threshold used to select an SSB in a two-step random access process;
an RSRP threshold used for selection between a normal uplink NUL carrier and a supplementary uplink SUL carrier;
an RSRP threshold used for selection between a two-step random access process and a four-step random access process;
an RSRP threshold used for message 3 repetition;
an RSRP threshold used for determining whether to use a first uplink waveform in the plurality of uplink waveforms; or
an RSRP threshold used for determining whether to determine a to-be-used uplink waveform from the plurality of uplink waveforms.

88. The network device according to any one of claims 83 to 87, wherein the dynamic indication information is carried in downlink control information DCI.

89. The network device according to claim 88, wherein the uplink communication is scheduled based on first DCI, wherein the DCI used to carry the dynamic indication information is the first DCI, or the DCI used to carry the dynamic indication information is DCI transmitted before or after the first DCI.

90. The network device according to claim 89, wherein an uplink waveform indicated by the dynamic indication information is used only for the uplink communication scheduled based on the first DCI.

91. The network device according to any one of claims 83 to 87, wherein the dynamic indication information is carried in an SSB.

92. The terminal device according to claim 91, wherein the dynamic indication information is a target DMRS sequence in the SSB.

93. The terminal device according to claim 92, wherein the target DMRS sequence belongs to a target DMRS set among a plurality of DMRS sequence sets, the plurality of DMRS sets are in a one-to-one correspondence with the plurality of uplink waveforms, and the target uplink waveform is an uplink waveform of the plurality of uplink waveforms that corresponds to the target DMRS set.

94. The network device according to any one of claims 83 to 93, wherein the dynamic indication information is current dynamic indication information, and before new dynamic indication information is received, uplink transmission processes of the terminal device are all performed based on an uplink waveform indicated by the current dynamic indication information.

95. The network device according to any one of claims 83 to 94, wherein the plurality of uplink waveforms correspond to a plurality of uplink resources, respectively.

96. The network device according to claim 95, wherein the plurality of uplink resources are configured by the network device or scheduled by the network device.

97. The network device according to claim 96, wherein resource locations of the plurality of uplink resources are determined based on an association relationship between the resource locations of the plurality of uplink resources.

98. The network device according to any one of claims 82 to 97, wherein the network device further comprises:
a second receiving module, configured to: before communication with the network device is performed by using the target uplink waveform, receive first indication information from the terminal device, wherein the first indication information is used to indicate the target uplink waveform.

99. The network device according to claim 98, wherein the first indication information is transmitted in a case in which the target uplink waveform is consistent with and/or inconsistent with a semi-statically configured uplink waveform.

100. The network device according to claim 98 or 99, wherein a time domain resource used to carry the first indication information is a first time domain resource, and the first time domain resource is determined based on one or more of following manners:
being configured by the network device; or
a time domain location of a second time domain resource, wherein the second time domain resource is a time domain resource used for the uplink communication.

101. The network device according to claim 100, wherein a location relationship between the first time domain resource and the second time domain resource is determined through protocol predefinition or through configuration by the network device.

102. The network device according to any one of claims 82 to 101, wherein the network device further comprises:
a third receiving module, configured to: after the network device receives the target uplink waveform, receive a first request from the terminal device, wherein the first request is used to request to switch an uplink waveform.

103. The network device according to claim 102, wherein the network device further comprises:
a first transmitting module, configured to transmit a feedback message for the first request to the terminal device, wherein the feedback message is used to indicate whether the network device allows the switching of the uplink waveform.

104. The network device according to claim 102 or 103, wherein
if a time domain resource used to carry the first request exists before a time domain resource for the uplink communication, the first request is transmitted before the uplink communication; and/or
if a time domain resource used to carry the first request does not exist before a time domain resource for the uplink communication, the first request is transmitted after the uplink communication.

105. The network device according to any one of claims 102 to 104, wherein
if a time domain resource used to carry the first request does not exist before a time domain resource for the uplink communication, the uplink communication is performed based on a semi-statically configured uplink waveform.

106. The network device according to any one of claims 82 to 105, wherein the plurality of uplink waveforms comprise a first uplink waveform and a second uplink waveform, the first uplink waveform is a Fourier transform-spread-orthogonal frequency division multiplexing DFT-S-OFDM waveform, and the second uplink waveform is a cyclic prefix orthogonal frequency division multiplexing CP-OFDM waveform.

107. The network device according to any one of claims 82 to 106, wherein the target uplink waveform is dynamically determined by the terminal device from the plurality of uplink waveforms.

108. The network device according to any one of claims 82 to 107, wherein the network device further comprises:
a second transmitting module, configured to: before the network device receives the uplink data of the terminal device based on the target uplink waveform, transmit configuration information to the terminal device, wherein the configuration information is used to indicate whether the terminal device determines a to-be-used uplink waveform from the plurality of uplink waveforms.

109. A terminal device, comprising a memory and a processor, wherein the memory is configured to store a program, and the processor is configured to invoke the program in the memory, to cause the terminal device to perform the method according to any one of claims 1 to 27.

110. A network device, comprising a memory and a processor, wherein the memory is configured to store a program, and the processor is configured to invoke the program in the memory, to cause the network device to perform the method according to any one of claims 28 to 54.

111. An apparatus, comprising a processor, configured to invoke a program from a memory, to cause the apparatus to perform the method according to any one of claims 1 to 27, or to cause the apparatus to perform the method according to any one of claims 28 to 54.

112. A chip, comprising a processor, configured to invoke a program from a memory, to cause a device on which the chip is installed to perform the method according to any one of claims 1 to 27, or to cause a device on which the chip is installed to perform the method according to any one of claims 28 to 54.

113. A computer-readable storage medium, wherein the computer-readable storage medium stores a program thereon, and the program causes a computer to perform the method according to any one of claims 1 to 27, or causes a computer to perform the method according to any one of claims 28 to 54.

114. A computer program product, comprising a program, wherein the program causes a computer to perform the method according to any one of claims 1 to 27, or causes a computer to perform the method according to any one of claims 28 to 54.

115. A computer program, wherein the computer program causes a computer to perform the method according to any one of claims 1 to 27, or causes a computer to perform the method according to any one of claims 28 to 54.
